# EUROPÄISCHE PATENTANMELDUNG

(11) **EP 1 901 408 A1**
(43) Veröffentlichungstag der Anmeldung: **19.03.2008**
(21) Anmeldenummer: 07017443.8
(22) Anmeldetag: 06.09.2007
(51) Int. Cl.: H02B 1/28

(54) **Schutzhaube für elektrische Installationseinheiten**

(30) Priorität: 14.09.2006 DE 102006043071
(71) Anmelder: RITTAL RCS Communication Systems GmbH & Co. KG, 35708 Herborn (DE)
(72) Erfinder: Diebel, Michael, 35867 Dillenburg (DE); Georg, Markus, 35767 Dillenburg (DE)
(74) Vertreter: Fleck, Hermann-Joseph

(57) **Zusammenfassung**

Die Erfindung bezieht sich auf eine Schutzhaube (10) für elektrische Installationseinheiten (1). Ein zuverlässiger Schutz der Installationseinheit (11) bei einfacher Handhabung wird dadurch erreicht, dass sie als im Gebrauchszustand bezüglich der Installationseinheit (1) rundum und auf der Oberseite wasserdicht und luftdicht geschlossene, auf der Unterseite offene und am unteren Rand mit Befestigungsmitteln zum Verankern versehene Stülphülle ausgebildet ist, die aus reißfestem flexiblem Material hergestellt ist (Fig.).

## Beschreibung

Die Erfindung bezieht sich auf eine Schutzhaube für elektrische Installationseinheiten.

Schutzhauben für elektrische Installationseinheiten sind z.B. durch seitlich überstehende, wasserdichte Dachaufbauten aus geformtem Blech oder Kunststoff für Installationsgehäuse im Außenbereich ausgebildet und schützen die elektrische Installationseinrichtung insbesondere vor Nässe durch Niederschläge. In vielen Fällen ist aber ein derartiger Schutz vor Wasser nicht ausreichend, so dass die Installationseinrichtung aufwändig demontiert werden muss, um Störungen und Schäden durch eindringendes Wasser zu vermeiden.

Der Erfindung liegt die Aufgabe zugrunde, eine Schutzhaube für elektrische Installationseinheiten bereit zu stellen, die einen besseren Schutz bietet und einfach handhabbar ist.

Diese Aufgabe wird mit den Merkmalen des Anspruches 1 gelöst. Hierbei ist vorgesehen, dass die Schutzhaube als im Gebrauchszustand bezüglich der Installationseinheit rundum und auf der Oberseite wasserdicht und luftdicht geschlossene, auf der Unterseite offene und am unteren umlaufenden Rand mit Befestigungsmitteln zum Verankern versehene Stülphülle ausgebildet ist, die aus reißfestem flexiblem Material hergestellt ist.

Mit der über die Installationseinheit gestülpten und an den Befestigungsmitteln verankerten wasserdichten und luftdichten Stülphülle wird eine Schutzhaube erhalten, die nicht nur vor Niederschlägen sondern auch gegen aufsteigendes Wasser nach Art einer Taucherglocke schützt, da die im Inneren der Stülphülle vorhandene Luftblase aufsteigendes Wasser zurückhält.

Eine erhöhte Zuverlässigkeit der Schutzwirkung und Stabilität wird dadurch erreicht, dass die Stülphülle doppelwandig ausgebildet ist. Beispielsweise können Außenhülle und Innenhülle zwei gleiche Bauteile sein.

Ein vorteilhafter Aufbau mit möglichst wenig Nähten bzw. Fügerändern und eine einfache Herstellung werden dadurch erreicht, dass die Stülphülle aus einem einlagigen Zuschnitt einstückig ausgebildet ist.

Zur Nahtverstärkung trägt auch bei, dass die Stülphülle aus einem rechteckförmigen oder quadratischen Zuschnitt hergestellt ist, der ringförmig geschlossen und an den zusammenstoßenden oder zur Überlappung gebrachten Rändern mit einer dichten Fügenaht versehen und ferner an seinen zwei quer zur Fügenaht verlaufenden Rändern mit weiteren dichten Fügenähten versehen ist und dass die Doppelwandigkeit der Stülphülle durch Einstülpen eines parallel zu den weiteren Fügenähten verlaufenden Abschnitts als Innenhülle in die sich ergebende Außenhülle hergestellt ist, wobei zudem nach außen stehende Nahtabschnitte vermieden werden. Durch das ringförmige Übereinanderlegen der Ränder oder Überdecken der zusammenstoßenden Ränder mit einem Fügestreifen wird eine stabile Fügenaht gegen Kräfte insbesondere in Umfangsrichtung erhalten und auch die weiteren Fügenähte bieten eine hohe Dichtigkeit. Dabei können die Nähte z.B. durch Kleben oder Schweißen hergestellt werden. Durch das Einstülpen sind die Innenhülle und Außenhülle am unteren Rand der Schutzhaube stabil und einstückig miteinander verbunden.

Um die Dichtigkeit zwischen der Außenhülle und Innenhülle gegenüber gegebenenfalls mittels Durchbrüchen im unteren Randbereich angebrachter Befestigungsmittel zu erhalten und eine Möglichkeit von Einlagen vorzusehen, bestehen weitere vorteilhafte Maßnahmen darin, dass im Bereich des unteren umlaufenden Randes der Stülphülle ein abgetrennter Hohlraum mittels einer vom untersten Rand beabstandeten Verbindungsnaht gebildet ist.

Für ein stabiles Halten der Schutzhaube und flächige Krafteinleitung in die Wände der Stülphülle sind des Weiteren die Maßnahmen vorteilhaft, dass im Bereich des unteren umlaufenden Randes der Stülphülle in dem zwischen den beiden Wänden gebildeten Hohlraum eine beschwerende und/oder versteifende Einlage eingebracht ist.

Für eine stabile Anbringung sind des Weiteren die Maßnahmen günstig, dass der Bereich des unteren umlaufenden Randes mit Befestigungselementen zur bezüglich der Installationseinrichtung ortsfesten Verankerung versehen ist.

Zur Verschleißfestigkeit und Zuverlässigkeit tragen die Maßnahmen bei, dass die weitere Fügenaht zumindest der Außenhülle mittels eines auf ihrer Außenseite aufgebrachten wasserdichten Verstärkungsstreifens abgedeckt ist.

Mit den Maßnahmen, dass die Außenhülle oder die Innenhülle zum Lufteinblasen in den Hohlraum für eine Dichtigkeitskontrolle mit einem Ventil versehen ist, kann die Funktionsfähigkeit überprüft bzw. überwacht werden.

Eine vorteilhafte Vorgehensweise zur Herstellung der Schutzhaube besteht darin, dass aus einem quadratischen oder rechteckförmigen wasserdichten flexiblen Material durch Umlegen ein Ring gebildet wird, dessen beiden rechtwinklig zur Umfangsrichtung verlaufenden zusammenstoßenden oder übereinander gelegten Ränder zu einem Fügerand und dessen beiden aufeinander gelegten in Umfangsrichtung verlaufenden Ränder zu zwei weiteren Fügerändern wasserdicht zusammengefügt werden, und dass anschließend das an drei Rändern gefügte und an dem vierten Rand einstückige, einen Hohlraum einschließende Material von einem der beiden weiteren Fügeränder her eingestülpt wird, um eine einseitig offene Stülphülle aus Außenhülle und Innenhülle herzustellen.

Dabei werden die Fertigung und Funktionsfähigkeit dadurch begünstigt, dass nach Herstellen des Fügerandes und eines der beiden weiteren Fügeränder zunächst das den einseitig offenen Hohlraum einschließende Material gewendet wird und danach der zweite weitere Fügerand hergestellt wird, so dass sich sowohl an der Außenhülle als auch an der Innenhülle zur Innenseite der Stülphülle liegende Fügeränder ergeben.

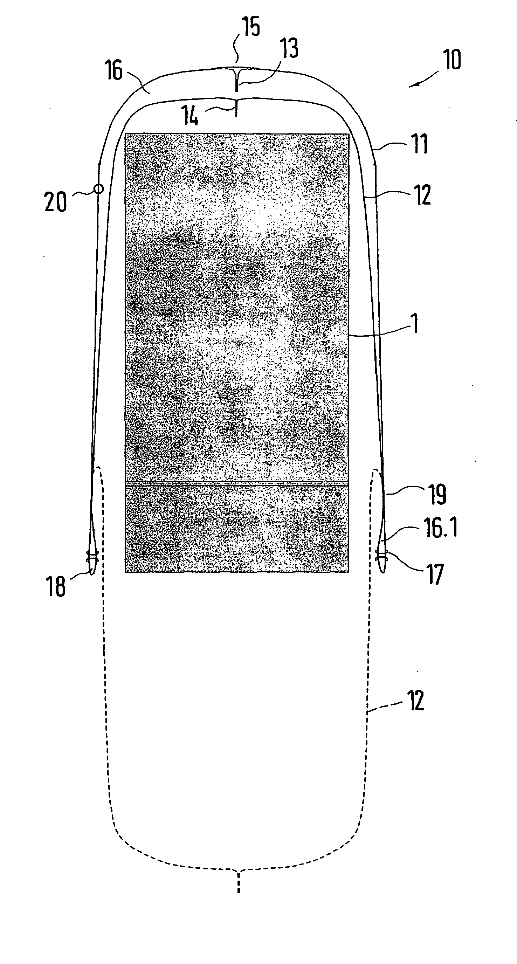

Die Erfindung wird nachfolgend anhand von Ausführungsbeispielen unter Bezugnahme auf die Zeichnung näher erläutert.

Die Fig. zeigt in einer Querschnittsdarstellung eine über eine elektrische Installationseinheit 1 gestülpte Schutzhaube 10 mit offener Unterseite und sich geschlossen um die Vorderseite, Rückseite, Seitenbereiche und Oberseite erstreckenden Wandbereiche. Der untere umlaufende Randbereich wird an einer die Installationseinheit 1 aufnehmenden Basis oder in deren unterem Abschnitt, beispielsweise einem dort vorhandenen Sockel, mittels Befestigungselemente 17 verankert. Die die Installationseinheit 1 überdeckende Stülphülle ist aus reißfestem, flexiblem Material, beispielsweise einem Planenwerkstoff hergestellt und wasserdicht und luftdicht, vorteilhaft doppelwandig ausgeführt.

Die Stülphülle ist aus einer Außenhülle 11 und einer mit dieser zumindest im unteren Randbereich vorzugsweise wasser- und luftdicht verbundenen Innenhülle 12 gebildet. Die Außenhülle 11 und die Innenhülle 12 sind vorteilhaft aus dem gleichen Material hergestellt, können aber auch aus unterschiedlichem Material bestehen. Auch bei der Herstellung gegebenenfalls erforderliche Fügenähte 13, 14 sind luft- und wasserdicht, vorzugsweise flächig ausgeführt, wobei zumindest die Fügenaht 13 der Au-βenhülle 11 mittels eines Verstärkungsstreifens 15 verstärkt ist. Zwischen der Au-βenhülle 11 und der Innenhülle 12 ist ein luft- und wasserdichter Hohlraum 16 gebildet, der zur Dichtigkeitskontrolle herangezogen werden kann, wobei über ein Ventil 20 an der Außenhülle 11 oder Innenhülle 12 Luft eingeblasen wird. Im nicht an der Installationseinheit 1 angelegten Zustand bläht sich dabei der Hohlraum 16 auf, wobei sich die Innenhülle 12 aus der Außenhülle 11 herausstülpt, falls sie nicht durch eine Fixierung bzw. einen in den Innenraum der Stülphülle eingebrachten Gegenstand daran gehindert wird, wie in der Fig. mittels der gestrichelten Linie dargestellt.

In dem unteren umlaufenden Randbereich der Stülphülle können die Außenhülle 11 und die Innenhülle 12 beabstandet von dem untersten Rand mittels einer umlaufenden dichten Verbindungsnaht 19 miteinander verbunden sein, um in dem unteren umlaufenden Randabschnitt einen getrennten Hohlraum 16.1 zu bilden, in den zur Verstärkung bzw. Verankerung oder Belastung eine Einlage 18, wie z.B. ein umlaufendes Flachprofil oder anderes Profil oder ein beschwerendes bzw. versteifendes Band eingelegt werden kann. Im unteren Randabschnitt befindliche Befestigungsmittel weisen z.B. schlaufenartige, ösenartige oder hakenartige Befestigungselemente 17 auf, die außen oder innen auf der Wandung der Außenhülle 11 oder Innenhülle 12 oder die Wandung durchdringend angebracht sein können, wobei auch die z.B. aus Flachmaterial gebildete Einlage 18 durchdrungen werden kann oder die Befestigungselemente 17 (bezüglich der Gebrauchslage) oberhalb der Einlage angeordnet sind. Mittels der Einlage 18 wird nicht nur eine Verstärkung erzielt, sondern auch eine im Wesentlichen flächige Krafteinleitung in die Seitenwände der Stülphülle und damit vorteilhafte Lastableitung erreicht.

Die Ausbildung der Schutzhaube mit einer doppelwandigen Stülphülle hat neben der genannten Möglichkeit der Dichtheitsprüfung den Vorteil erhöhter Stabilität und Zuverlässigkeit. Das flexible reißfeste Material, wie z.B. der Planenwerkstoff, ermöglicht eine einfache Lagerung der Schutzhaube unter Faltung bzw. Komprimierung. Auch eine Anpassung an unterschiedliche Geometrien von Installationseinheiten 1 ist möglich, wobei z.B. durch Zusammenbinden das Volumen dem zu schützenden Körper weitgehend angepasst und der Auftrieb, der sich bei aufsteigendem Wasser nach dem Prinzip einer Tauchglocke ergibt, vermindert werden kann. Indem die Schutzhaube 10 über ein tragendes Untergestell gestülpt wird, können auch horizontale Kräfte aus der Strömung aufgenommen werden. Auch dicht an einer Mauer stehende Installationseinheiten 1 können wegen der flexiblen dünnen Wandung bei leichter Handhabung überstülpt werden. Entstehende Auftriebskräfte können unterschiedlich abgefangen werden, indem z.B. Sandsäcke auf die Haube gestapelt werden oder indem die Haube über die Ösen an geeignete Fundamente oder Gewichte oder aber an dem Gehäuse selbst befestigt wird.

Durch die stabile Ausführung der Stülphülle hält die nach dem Prinzip einer Tauchglocke bei aufsteigendem Wasser im Inneren der Stülphülle entstehende Luftblase auch relativ hohen Drücken zuverlässig Stand. Als Werkstoff kann Rollenware verwendet werden. Der z.B. quadratische oder rechteckförmige Zuschnitt wird einmal zusammengelegt bzw. zu einem Ring gelegt und an den zusammenstoßenden oder vorteilhaft überlappenden Rändern mittels einer dichten Fügenaht durch Verkleben oder Verschweißen verbunden. Sodann wird einer der beiden quer bzw. rechtwinklig zu der gebildeten Rundnaht verlaufenden Ränder (z.B. 13) ebenfalls flächig verbunden. Die dadurch erhaltene tütenförmige Vorrichtung wird eingestülpt, so dass die Außenfläche zur Innenfläche wird. Anschließend wird der noch offene Rand zu einer weiteren dichten Fügenaht 14 gefügt. Wird nun der ringsum an den Rändern dichte Gegenstand von der weiteren Fügenaht 14 her in den Hohlraum zwischen den beiden Lagen nach innen gestülpt, ergibt sich die auf einer Seite offene Stülphülle mit der Außenhülle 11 und der Innenhülle 12, deren beiden Fügenähte 13, 14 zum Inneren der Stülphülle liegen. Zur Verstärkung der Außenhülle 11 wird außen der Verstärkungsstreifen 15 aufgebracht, vorteilhaft auch verschweißt oder verklebt, wie die übrigen Nähte.

Bevor die tütenförmige Vorrichtung eingestülpt wird, kann auch die weitere Fügenaht 14 bereits bis auf eine kleine Öffnung hergestellt werden, wobei dann durch die Öffnung das Wenden der Außenseite zur Innenseite vorgenommen wird und in einem letzten Schritt erst die kleine Öffnung durch eine anschließende dichte Fügenaht vollständig verschlossen wird. Vor dem Wenden kann auf diese Weise auch die weitere Fügenaht 14 der schließlich erhaltenen Innenhülle 12 mit einem Verstärkungsstreifen versehen werden.

Zum Einfügen der Einlage 18 kann der Wandbereich an dem getrennten Hohlraum 16.1 an geeigneten Stellen aufgeschnitten werden, da die Verbindungsnaht 19 den Hohlraum 16 zwischen der Außenhülle 11 und der Innenhülle 12 nach unten dicht abschließt.

## Patentansprüche

1. Schutzhaube (10) für elektrische Installationseinheiten (1),
**dadurch gekennzeichnet,**
**dass** sie als im Gebrauchszustand bezüglich der Installationseinheit (1) rundum und auf der Oberseite wasserdicht und luftdicht geschlossene, auf der Unterseite offene und am unteren Rand mit Befestigungsmitteln zum Verankern versehene Stülphülle ausgebildet ist, die aus reißfestem flexiblem Material hergestellt ist.

2. Schutzhaube nach Anspruch 1,
**dadurch gekennzeichnet,**
**dass** die Stülphülle doppelwandig ausgebildet ist.

3. Schutzhaube nach Anspruch 1 oder 2,
**dadurch gekennzeichnet,**
**dass** die Stülphülle aus einem einlagigen Zuschnitt einstückig ausgebildet ist.

4. Schutzhaube nach einem der vorhergehenden Ansprüche,
**dadurch gekennzeichnet,**
**dass** die Stülphülle aus einem rechteckförmigen oder quadratischen Zuschnitt hergestellt ist, der ringförmig geschlossen und an den zusammenstoßenden oder zur Überlappung gebrachten Rändern mit einer dichten Fügenaht versehen und ferner an seinen zwei quer zur Fügenaht verlaufenden Rändern mit weiteren dichten Fügenähten (13, 14) versehen ist und
**dass** die Doppelwandigkeit der Stülphülle durch Einstülpen eines parallel zu den weiteren Fügenähten (13, 14) verlaufenden Abschnitts als Innenhülle (12) in die sich ergebende Außenhülle (11) hergestellt ist.

5. Schutzhaube nach Anspruch 4,
**dadurch gekennzeichnet,**
**dass** die weiteren Fügenähte (13, 14) der Stülphülle beide zu deren Unterseite gerichtet sind.

6. Schutzhaube nach einem der vorhergehenden Ansprüche,
**dadurch gekennzeichnet,**
**dass** im Bereich des unteren umlaufenden Randes der Stülphülle ein abgetrennter Hohlraum (16) mittels einer vom untersten Rand beabstandeten Verbindungsnaht (19) gebildet ist.

7. Schutzhaube nach einem der vorhergehenden Ansprüche,
**dadurch gekennzeichnet,**
**dass** im Bereich des unteren umlaufenden Randes der Stülphülle in dem zwischen den beiden Wänden gebildeten Hohlraum eine beschwerende und/oder versteifende Einlage (18) eingebracht ist.

8. Schutzhaube nach einem der vorhergehenden Ansprüche,
**dadurch gekennzeichnet,**
**dass** der Bereich des unteren umlaufenden Randes mit Befestigungselementen (17) zur bezüglich der Installationseinrichtung ortsfesten Verankerung versehen ist.

9. Schutzhaube nach einem der Ansprüche 3 bis 8,
**dadurch gekennzeichnet,**
**dass** die weitere Fügenaht (13) zumindest der Außenhülle (11) mittels eines auf ihrer Außenseite aufgebrachten wasserdichten Verstärkungsstreifens (15) abgedeckt ist.

10. Schutzhaube nach einem der vorhergehenden Ansprüche,
**dadurch gekennzeichnet,**
**dass** die Außenhülle (11) oder die Innenhülle (12) zum Lufteinblasen in den Hohlraum für eine Dichtigkeitskontrolle mit einem Ventil (20) versehen ist.

11. Verfahren zum Herstellen einer Schutzhaube nach Anspruch 1,
**dadurch gekennzeichnet,**
**dass** aus einem quadratischen oder rechteckförmigen wasserdichten flexiblen Material durch Umlegen ein Ring gebildet wird, dessen beiden rechtwinklig zur Umfangsrichtung verlaufenden zusammenstoßenden oder übereinander gelegten Ränder zu einem Fügerand und dessen beiden aufeinander gelegten in Umfangsrichtung verlaufenden Ränder zu zwei weiteren Fügerändern (13, 14) wasserdicht zusammengefügt werden, und
**dass** anschließend das an drei Rändern gefügte und an dem vierten Rand einstückige, einen Hohlraum einschließende Material von einem der beiden weiteren Fügeränder (13, 14) her eingestülpt wird, um eine einseitig offene Stülphülle aus Außenhülle (11) und Innenhülle (12) herzustellen.

12. Verfahren nach Anspruch 11,
**dadurch gekennzeichnet,**
**dass** nach Herstellen des Fügerandes und eines der beiden weiteren Fügeränder (13, 14) zunächst das den einseitig offenen Hohlraum einschließende Material gewendet wird und danach der zweite weitere Fügerand (14, 13) hergestellt wird, so dass sich sowohl an der Außenhülle (11) als auch an der Innenhülle (12) zur Innenseite der Stülphülle liegende Fügeränder ergeben.
